# EUROPEAN PATENT SPECIFICATION

(11) **EP 3 665 328 B1**
(45) Date of publication and mention of the grant of the patent: **19.08.2020**
(21) Application number: 19797215.1
(22) Date of filing: 25.10.2019
(51) Int. Cl.: D21H 27/20, D21H 27/30, D21H 17/67, D21H 21/28, D21H 21/40

(54) **WATERMARKED DÉCOR PAPER**
WASSERMARKIERTES DEKORPAPIER
PAPIER DÉCOR FILIGRANÉ

(30) Priority: 26.10.2018 FR 1871318
(43) Date of publication of application: 17.06.2020
(73) Proprietor: Ahlstrom-Munksjö Oyj, 00100 Helsinki (FI)
(72) Inventor: CHARIGNON, Sébastien, 38490 Saint Ondras (FR); ALAINE, Sébastien, 67100 Strasbourg (FR); CALZA, Valérie, 38140 Apprieu (FR)
(74) Representative: Nony
(86) International application number: PCT/EP2019/079287
(87) International publication number: WO 2020/084146

(56) References cited:
- WO-A2-03/044278
- FR-A- 1 476 444
- GB-A- 2 301 601
- US-A1- 2013 014 891

## Description

### Technical Field and Background

The present invention relates to the domain of Décor papers, namely papers for manufacturing laminates.

Laminated panels or profiles (also called "laminates") have been used for many years as materials in housing and commercial and industrial premises. Typical applications of such laminates are floor coverings, in particular imitating wood flooring, and the surface skins of furniture, tabletops, work surfaces and chairs, among others;

There are two main types of decorative "laminates": the so called high pressure (HPL or "High-Pressure Laminates") and the so called low pressure (LPL or "Low-Pressure Laminates").

High pressure laminates (HPL) are produced from an assemblage of resin-impregnated sheets. These sheets are generally of kraft paper and have been impregnated with a thermosetting resin, usually a phenolic resin. After impregnating the sheets with resin, they are dried, cut up and stacked one on top of the other. The number of sheets in the stack depends on the applications and varies between 3 and 9, but can be higher. A Décor paper is then placed on top of the pile of sheets making up the mass. This is generally a sheet of paper with a printed pattern or colour, or containing decorative particles, impregnated with thermosetting resin, chosen from melamine-formaldehyde, urea-formaldehyde, benzoguanamine or unsaturated polyester resins, or another resin, in particular epoxy or polyurethane.

In general, for manufacturing high pressure laminates, a protective sheet called "overlay" is placed over the Décor paper. This protective sheet does not comprise any pattern and has a transparent appearance in the final laminate. The role of this protective sheet is to improve abrasion resistance of the laminate. The stack of impregnated sheets is then placed in a laminating press in which the plates give the required surface finish to the laminate. The stack is then compressed by heating at a temperature of the order of 110°C to 170°C, and by pressure of the order of 5.5 MPa to 11 MPa for about 25 to 60 minutes, to obtain a unified structure.

This unified structure is then fixed to a base; for example, it is glued to a particle board, in particular, a wood particle board.

High pressure laminates can also be obtained by a so-called "dry process", which consists in using a Décor paper non-impregnated with thermosetting resin, generally sandwiched between a barrier paper impregnated with resin placed underneath, and a protective overlay also impregnated with resin placed on top. There are variants where the overlay is not placed on top but underneath. The Décor paper becomes impregnated with resin when a pressure is exerted on the stack of various sheets, by diffusion of the resin out of the barrier and overlay papers with which the Décor paper is in contact or is close to.

Low pressure (LPL) laminates are produced using only a Décor paper impregnated with thermosetting resin, and possibly an overlay, which is laminated directly on the base during a short cycle at a temperature of the order of 160° to 200°C and a pressure from 1.25 MPa to 3 MPa.

Apart from high pressure and low pressure processes, there is a continuous lamination process called CPL ("continuous pressed laminates"), which is similar to the high pressure process but in which papers unrolled from spools are used instead of pre-cut papers.

The Décor paper used for manufacturing laminates is a sheet of paper made on a paper machine. This paper generally has an opacifying pigment in the base paper substrate, with a relatively high refractive index, such as titanium dioxide. This paper generally has other fillers and coloured pigments in the base paper substrate.

Décor paper is used to confer a particular aesthetic appearance to the laminated support on which it is placed. It will mask the support (namely the board for a low pressure laminate or the body of phenolic resin-impregnated sheets for a high pressure laminate) and it will provide a colour if it is a plain paper or a pattern if it is a printed Décor paper.

This printed decorative pattern traditionally imitates the appearance of a natural material such as wood or marble, but may also consist of geometrical patterns according to the designer's creativity. This printing step is independent of the Décor paper manufacturing process.

The printing techniques used to print Décor papers are for example rotogravure and inkjet.

Examples of Décor paper are described in publications EP1749134 and EP0964956.

In the standard laminate manufacturing process, the Décor paper is first of all printed, then impregnated with resin, and finally hot pressed with its support at high or low pressure. The impregnation step requires a Décor paper with high wet strength so that it has sufficient strength after total immersion in the resin, the latter preferably being aqueous, and total impregnability or at least the ability to be totally traversed by the resin in as short a time as possible. The impregnation-related properties are generally obtained by using Décor papers with very high air and impregnation resin permeability.

The printing step makes the manufacture of Décor paper and laminates more complex and represents a significant cost.

There is a need for lower-cost laminates having an aesthetic appearance.

### Summary of the invention

The invention aims to meet this need by offering a Décor paper suitable for the industrial manufacture of all types of laminate, with or without prior impregnation of the Décor paper, in particular by the use of high pressure, low pressure processes or a process without impregnation (dry process).

The Décor paper according to the invention is characterised by the fact that it is watermarked.

The watermark enables an appearance other than plain to be created, and potentially a 3D effect on the laminate made with such a Decor paper, improving the aesthetic appearance of the laminate without having to print. This watermark can be seen with the naked eye in transmitted light by holding the paper up to the light.

In this way the cost of printing is avoided to obtain a Décor paper having a pattern by using the invention.

Watermarking paper is a very old technique in the field of security papers such as bank notes or some writing papers. These papers have a very different composition which is unsuitable for Décor paper. This is because impregnating and laminating watermarked security or writing paper would have the effect of making the watermark disappear.

To the applicant's knowledge, the watermark technique has never been used for a Décor paper to modify the visual appearance of a laminate.

The paper can be watermarked over its entire surface. Thus, the watermark pattern can be repeated over the entire surface of the paper, with or without a gap between the patterns. The pattern may or may not be continuous. In the case of an isolated pattern, it may be distributed uniformly over the entire surface of the paper.

The paper can be watermarked over part of its surface. For example, the paper may be watermarked on only one edge. This watermark may or may not extend over the whole width and/or length of the paper.

The grammage of the Décor paper is preferably from 30 to 250 g/m², and particularly from 60 to 120 g/m². The grammage of the sheets is determined according to standard ISO 536 after conditioning according to standard ISO 187. The grammage is that of the sheet before impregnation with resin.

The Décor paper according to the invention contains at least one opacifying filler. By opacifying filler, we mean any filler conferring opacity after lamination of the watermarked Décor paper; this filler may be composed of any opacifying pigment or other mineral or organic opacifying particulate constituent and the filler may contain a single pigment or other opacifying constituent or a mixture of several pigments and/or other opacifying constituents.

The opacifying filler is chosen from among the raw materials traditionally used in Décor paper manufacture such as mineral pigments (in particular, titanium dioxide, such as rutile, or iron oxides) or organic compounds, in particular pigments, and their mixtures, which have opacifying power within the resin-impregnated paper. The opacifying filler is preferably within the paper substrate of the Décor paper, and will have been completely incorporated into it before the watermark is formed.

The total level of opacifying filler can be equal to or greater than 10% with respect to the total weight of the sheet, measured for a mineral filler according to standard ISO 2144. The total level of opacifying filler can be from 10 to 50 with respect to the total weight of the sheet.

The total quantity of the opacifying filler is preferably from 3 to 50 g/m², and particularly from 15 to 40 g/m².

The opacifying fillers considered here are those conferring opacity on the resin-impregnated paper as a result of their difference in refractive index compared with the resin and/or their light absorption character (colour).

This opacifying filler functioning by diffusion of light preferably has a refractive index greater than 2. Thus, the opacifying filler can have a refractive index greater than 2. This is the case in particular when the opacifying filler contains or is a pigment such as titanium dioxide.

The filler conferring opacity by the absorption of light can be chosen from pigments such as oxides of iron. Thus, the opacifying filler can contain or consist of one or more oxides of iron.

The size of the opacifying filler is preferably from 0.05 to 30 microns, better from 0.1 to 15 microns. This size is the so-called D50 mass, and it is the size below which 50% of the mass of the opacifying filler lies.

The Décor paper can contain other particulate constituents, in particular pigments usually used in this field that have little or no opacifying effect on the resin-impregnated paper, such as kaolin, calcined kaolin, diatomaceous earths, silicas, etc. These compounds have a refractive index close to that of the impregnation resin.

The watermarked Décor paper of the invention contains one or more watermark patterns over all or part of the surface of the paper. The watermark pattern is visible by observing the paper under transmitted light as with all watermarked paper. This pattern becomes visible directly on the laminate obtained from the said paper, whatever the lamination process envisaged. This effect can be explained by the variation in opacities produced by the differences in quantities of opacifying filler engendered by the watermarking. The watermarked Décor paper according to the invention can be coloured.

The invention also relates to a decorative laminate containing a watermarked Décor paper according to the invention, the watermark being visible by reflection in the laminate. This laminate can show a colour contrast between the watermarked Décor paper and the underlying structure. The latter may be a particle board or one or more sheets of impregnated kraft paper or a contrasting sheet.

In particular, the laminate may contain a Décor paper of a first colour laid on an underlying structure of a second colour different from the first, in such a way that the watermark is visible through the variation in opacity within the Décor paper and the colour difference between the first and second colours. This underlying structure can contain at least one other layer of paper and/or a support such as a particle board.

By "colour" we mean a chromatic or achromatic colour such as black and white. The colour difference ΔE between the above mentioned first and second colours is preferably equal to or greater than 2 in the CIELAB colour space.

The watermarked Décor paper is preferably unprinted.

The laminate containing the watermarked Décor paper according to the invention have been obtained by any laminate manufacturing process such as LPL, HPL or CPL.

The invention also relates to a manufacturing process for a watermarked Décor paper according to the invention, with the watermark being produced in the wet part of the paper machine either with the aid of a watermark roller, also called "Dandy roll", or with a drainage fabric having a structure allowing the desired watermark to be obtained.

With a Dandy roll, the watermark can be produced with good contrast in opacity while maintaining a paper production rate comparable with industrial requirements in the field of laminate manufacture. In comparison, watermarked papers obtained in the field of security papers with cylinder form machines cannot be produced at the production rates usually required in the field of Decor paper. However, it is not impossible to produce watermarked Décor paper according to the invention using cylinder form technology.

On a flat plate machine, so called "Fourdrinier" machine, an alternative to a Dandy roll is a drainage fabric having a structure for obtaining the watermark. The process may thus comprise watermarking in the wet part of the paper machine using a drainage fabric with a structure for obtaining the desired watermark.

The invention also relates to a laminate manufacturing process in which a watermarked Décor paper according to the invention is impregnated with thermosetting resin.

The paper preferably has a resin penetration time on each of its faces equal to or below than 10s, better, to 5s.

The rate of impregnation is measured by determining the time of penetration of resin through the sheet; this time is determined as follows:
- a 50% by weight solution of resin is prepared by dissolving powdered KAURAMIN 773 melamine-formaldehyde resin in distilled water heated to about 45°C. Its viscosity is adjusted by slightly diluting with water until it is of the order of 55 mPas (cps) around 20°C with a Brookfield viscometer measured at 100 rpm - Shaft No. 2.
- the impregnation time of a sheet of paper is determined as follows:
- two square samples (10 x 10 cm) are cut for testing; when testing each side, the side is identified.
- a watch glass is filled with resin,
- the paper square is placed on the surface of the resin with the side to be tested in contact with the resin, and a stopwatch is started at the same time,
- the time for totally traversing the paper is noted, giving the penetration time of the resin.

A Décor paper according to the invention can have a Gurley porosity of 5 to 60 seconds, ideally 15 to 40 seconds. The air permeability, or Gurley porosity method, is determined according to standard ISO 5636-5:2013.

A Décor paper of the invention can be smoothed or unsmoothed.

A Décor paper according to the invention can be smoothed by any process known to experts in the field. The Décor paper according to the invention can have a Bekk smoothness of 20 to 200 seconds on at least one of its sides.

### Brief description of the figures

A better understanding of the invention will be gained by reading the detailed description that follows of an example of a non-limiting embodiment of it, and by examining the appended drawing, in which:
[Fig 1] Figure 1 is a partial and schematic cross section of an example of an HPL laminate according to the invention,
[Fig 2] Figure 2 is a partial and schematic cross section of an example of an LPL laminate according to the invention,
[Fig 3] Figure 3 shows the watermarked Décor paper according to the invention in isolation and schematically,
[Fig 4] Figure 4 shows a partial and schematic example of a paper machine for manufacturing watermarked Décor paper according to a process of the invention, and
[Fig 5] Figure 5 shows a detail in the production of a Dandy roll that can be used to implement the invention.

### Detailed description of the invention

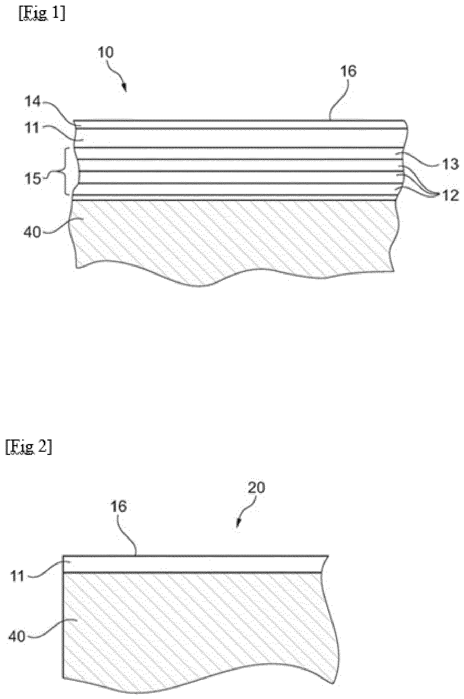

Figure 1 shows an example of an HPL laminate 10 according to the invention. In this figure, and for the sake of clarity, the actual proportions are not respected.

Laminate 10 contains a Décor paper 11 in conformity with the invention, covering an underlying structure 15 composed, for example, of a possible contrast sheet 13 and of one or more sheets of kraft paper impregnated with melamine formaldehyde resin or urea or phenolic formol 12.

The sheet of Décor paper 11 may be covered with a protective sheet 14 called "overlay".

The sheet of Décor paper 11 may be impregnated with resin.

The assembly 15 composed of the sheet of Décor paper 11, of one or more underlying layers 12 and possibly 13, and by any protective layer 14, is glued to a support such as a particle board 40.

Figure 2 shows an example of an LPL laminate 20 according to the invention. In this figure, and for the sake of clarity, the actual proportions are not respected.

The laminate 20 is composed of a sheet of Décor paper 11 according to the invention, impregnated with resin. The assembly is laminated directly on the support 40.

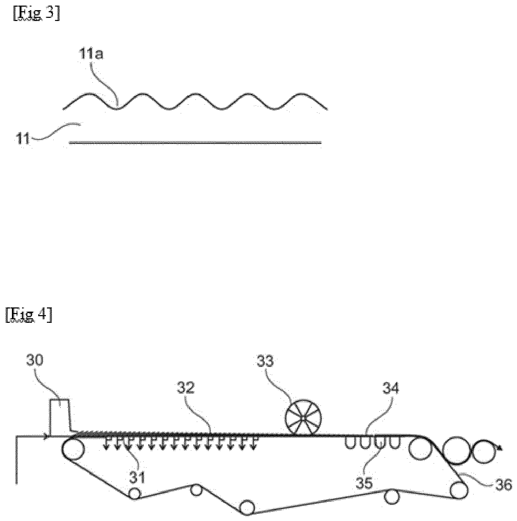

The sheet of Décor paper 11 contains, in accordance with the invention, a watermark 11a shown schematically in figure 3.

This watermark 11a causes a variation in opacity within the sheet because of a local variation in the quantity of opacifying filler. Accordingly, the watermark 11a is formed by the opacifying filler and more particularly due to a local concentration variation of this opacifying filler in the sheet of Décor paper 11.

This variation in opacity is sufficiently pronounced for a corresponding pattern to be visible to the naked eye when the external side 16 of the laminate is observed.

In a general way, Décor paper is used to mask the sheets 12 composing the underlying structure or the particle board 40. Thus, there is a natural contrast between the Décor paper and the underlying structure or particle board 40, making the watermark 11a easily visible.

If the visibility of the watermark is to be increased still more, a contrast sheet 13 of a different colour from that of the Décor paper 11 will be used. The Décor paper 11 can thus be white and the contrast sheet 13 non-white. The Décor paper 11 may also be non-white, and of a different colour from the contrast sheet 13 or of any other underlying structure.

The protective sheet 14 is preferably transparent once it has been impregnated with resin not containing any opacifying filler.

The Décor paper 11 contains an opacifying filler whose distribution within the sheet is modified by creating the watermark 11a.

To manufacture the Décor paper 11, a paper machine such as the one shown schematically in figure 4 can be used.

This machine has a headbox 30 which feeds the fibrous suspension into the sheet forming section 31, where the mixture is drained.

The fibrous suspension is produced conventionally.

For Décor paper, the pulp used is typically based on short fibres, essentially or exclusively for example 100% short wood fibres, in particular eucalyptus. After the pulp has been refined, an opacifying filler is added, for example titanium dioxide (rutile) to develop the opacity, together with one or more coloured pigments to adjust the colour if necessary. The usual fixing additives and the wet strength agent can be added, for example a polyamine epichlorhydrin resin, a polyamide/polyamine-epichlorhydrin resin, a cationic polyacrylate or a cationic starch. This is the mixture that is sent to the headbox after dilution.

The sheet being formed 32 is driven by a forming fabric 36 which loops round and passes under a watermark roller 33, also called "Dandy roll", which locally deforms the sheet and modifies the distribution of opacifying filler within the sheet to form the watermark 11a.

The sheet being formed 32 has a very high moisture content between 80% and 98% when it passes under the Dandy roll 33, the water line 34 being downstream of the Dandy roll 33 as illustrated.

One or more suction boxes 35 are placed downstream of the Dandy roll 33 to absorb part of the residual water from the sheet, then the sheet is fed to a part of the machine not shown here for pressing, drying and possibly calendering. The watermarked Décor paper can then be wound on reels.

The Dandy roll 33 has a relief surface to create the desired watermark 11a. The relief surface of the Dandy roll 33 enables to create a local concentration variation of the opacifying filler within the sheet of paper and therefore the watermark 11a.

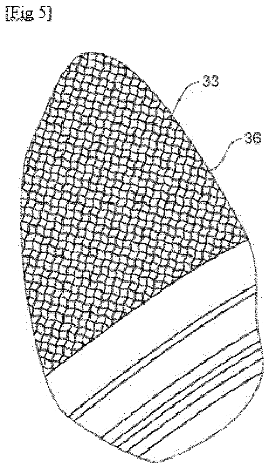

This relief is for example obtained with a grid 36 over the entire surface of the Dandy roll 33 as illustrated in figure 5. In such embodiment, the pattern formed by the grid 36 corresponds to the desired watermark 11a that will be created on the Décor paper 11 and that will be visible on the laminate 20. As a variant, the relief is obtained by embossing a fabric positioned in place of the grid. The relief is preferably around the entire surface of the Dandy roll 33, continuously or in the form of spaced out patterns. According to this variant, the pattern formed by embossing the fabric corresponds to the desired watermark 11a. Thus, during the papermaking process, the emboss relief enables to create a local concentration variation of the opacifying filler during the drainage of the paper substrate containing the opacifying filler to form the Décor paper 11.

The watermarked Décor paper 11 is then used as such, in a known laminate manufacturing process preferably without being printed. Indeed, the printing of the watermarked Décor paper 11 is not necessary because of the presence of the watermark 11a formed on the Décor paper 11 due to the local concentration variation of the opacifying filler within the Décor paper 11.

During the manufacture of high pressure, low pressure or continuous laminates, the watermarked Décor paper 11 can be impregnated with a heat-stable thermosetting resin and hot pressed with its support at high or low pressure. The thermosetting resin can be chosen from melamine-formaldehyde resins, urea-formaldehyde resins, benzoguanamine-formaldehyde resins, unsaturated polyester resins, dicyanamide-formaldehyde resins, epoxy resins, polyurethane resins, acrylic resins and their mixtures.

Alternatively, in the case of a process without impregnation (dry process), the watermarked Decor paper is stacked, non-impregnated between two papers impregnated with thermosetting resin, and impregnation of the watermarked Décor paper occurs when pressure is exerted on the stack.

Once the resin has been completely cured after lamination, it will provide surface strength to the final laminate (abrasion resistance, dirt and steam resistance and resistance to chemicals such as solvents, acids and bases, etc.)

According to one particular embodiment of the invention, the watermarked Décor paper of the invention is impregnated with a thermosetting resin, then the resin is partially cured in acid medium, the level of volatile compounds being between 5 and 8% of the weight of the sheet.

Once this transformation step is completed, the pattern created by the watermarked Décor paper is visible on the laminate by reflection. That is to say that the watermark 11a pattern formed on the Décor paper 11 is visible to the naked eye directly on the laminate 20.

According to another specific embodiment and optionally, the Décor paper 11 can be embossed during the lamination step in order to provide this Décor paper 11 with a three-dimensional form if needed to further enhance the visual effect of the pattern created by the watermark.

The invention is not, of course, limited to what has been described. In particular, although the invention allows an aesthetic appearance to be given to the laminate without printing the Décor paper, the invention does not rule out the Décor paper being printed in order to provide additional and/or complementary effects.

## Claims

1. Watermarked Decor paper (11).

2. Paper according to Claim 1, being watermarked over the entire surface thereof or over a part of the surface thereof.

3. Paper according to Claim 1 or 2, comprising at least one inorganic opacifying filler, providing opacity after lamination of the watermarked Decor paper.

4. Paper according to Claim 1 or 2, comprising at least one organic opacifying filler, providing opacity after lamination of the watermarked Decor paper.

5. Paper according to Claim 3 or 4, the opacifying filler having a refractive index greater than 2, and preferably comprising or being titanium dioxide.

6. Paper according to Claim 3 or 4, the opacifying filler providing opacity by absorbing light.

7. Paper according to Claim 6, the opacifying filler comprising or being a pigment chosen from iron oxides or comprising or being an organic pigment.

8. Paper according to any one of Claims 3 to 7, the content of opacifying filler being greater than or equal to 10% relative to the total weight of the sheet, the total amount of opacifying filler preferably ranging from 3 to 50 g/m², more preferably from 15 to 40 g/m².

9. Decorative laminate (10; 20) comprising a watermarked Decor paper (11) as defined in any one of the preceding claims, the watermark being visible in reflection on the laminate.

10. Decorative laminate according to Claim 9, having a colour contrast between the watermarked Decor paper and the underlying structure, the underlying structure preferably being a particle board (40), or one or more impregnated kraft paper sheets (12) or a contrast sheet (13).

11. Decorative laminate according to Claim 9 or 10, the watermarked Decor paper (11) being unprinted.

12. Decorative laminate according to any one of Claims 9 to 11, having been obtained by an LPL, HPL or CPL process.

13. Process for producing a Decor paper according to any one of Claims 1 to 8, comprising producing the watermark (11a) in the wet part of the paper making machine using a Dandy roll (33).

14. Process for producing a Decor paper according to any one of Claims 1 to 8, comprising producing the watermark (11a) in the wet part of the paper making machine using a drainage fabric having a structure which makes it possible to obtain the desired watermark.

15. Process for producing a laminate, wherein a watermarked Decor paper according to any one of Claims 1 to 8 is impregnated with thermosetting resin.

## Patentansprüche

1. Wasserzeichen Dekorpapier.

2. Papier nach Anspruch 1 mit einem Wasserzeichen über seiner gesamten Oberfläche oder über einem Teil seiner Oberfläche.

3. Papier nach Anspruch 1 oder 2, umfassend mindestens einen anorganischen trübenden Füllstoff, der nach dem Laminieren des Wasserzeichen Dekorpapiers (11) Trübung bereitstellt.

4. Papier nach Anspruch 1 oder 2, umfassend mindestens einen organischen trübenden Füllstoff, der nach dem Laminieren des Wasserzeichen Dekorpapiers (11) Trübung bereitstellt.

5. Papier nach Anspruch 3 oder 4, wobei der trübende Füllstoff einen Brechungsindex von mehr als 2 aufweist und vorzugsweise Titandioxid umfasst oder ist.

6. Papier nach Anspruch 3 oder 4, wobei der trübende Füllstoff Trübung durch Absorption von Licht bereitstellt.

7. Papier nach Anspruch 6, wobei der trübende Füllstoff ein unter Eisenoxiden ausgewähltes Pigment umfasst oder ist, oder ein organisches Pigment umfasst oder ist.

8. Papier nach einem der Ansprüche 3 bis 7, wobei der Gehalt an trübendem Füllstoff gleich oder größer als 10%, bezogen auf das Gesamtgewicht des Blatts ist, wobei die Gesamtmenge an trübendem Füllstoff vorzugsweise im Bereich von 3 bis 50 g/m², insbesondere 15 bis 40 g/m² liegt.

9. Dekoratives Laminat (10; 20) umfassend ein Wasserzeichen Dekorpapier (11) nach einem der vorhergehenden Ansprüche, wobei das Wasserzeichen als Reflexion auf dem Laminat sichtbar ist.

10. Dekoratives Laminat nach Anspruch 9, das einen Farbkontrast zwischen dem Wasserzeichen Dekorpapier (11) und der darunter liegenden Struktur aufweist, wobei die darunter liegende Struktur vorzugsweise eine Spanplatte (40) oder ein oder mehrere imprägnierte Kraftpapierblätter (12) oder eine Kontrastfolie (13) ist.

11. Dekoratives Laminat nach Anspruch 9 oder 10, wobei das Wasserzeichen Dekorpapier (11) unbedruckt ist.

12. Dekoratives Laminat nach einem der Ansprüche 9 bis 11, das mit einem LPL-, HPL- oder CPL-Verfahren erhalten wurde.

13. Verfahren zur Herstellung eines Dekorpapiers nach einem der Ansprüche 1 bis 8, umfassend die Herstellung des Wasserzeichens (11a) im nassen Teil der Papierherstellungsmaschine unter Verwendung eines Egoutteurs (33).

14. Verfahren zur Herstellung eines Dekorpapiers nach einem der Ansprüche 1 bis 8, umfassend die Herstellung des Wasserzeichens (11a) im nassen Teil der Papierherstellungsmaschine unter Verwendung eines Drainagestoffs, der eine Struktur aufweist, die es ermöglicht, das gewünschte Wasserzeichen zu erhalten.

15. Verfahren zur Herstellung eines Laminats, wobei ein Wasserzeichen Dekorpapier (11) nach einem der Ansprüche 1 bis 8 mit einem wärmehärtbaren Harz imprägniert wird.

## Revendications

1. Papier décor filigrané.

2. Papier selon la revendication 1, étant filigrané sur toute sa surface ou sur une partie de sa surface.

3. Papier selon la revendication 1 ou 2, comportant au moins une charge opacifiante minérale apportant de l'opacité après stratification du papier décor filigrané (11).

4. Papier selon la revendication 1 ou 2, comportant au moins une charge opacifiante organique apportant de l'opacité après stratification du papier décor filigrané (11).

5. Papier selon la revendication 3 ou 4, la charge opacifiante ayant un indice de réfraction supérieur à 2, et de préférence comportant ou étant du dioxyde de titane.

6. Papier selon la revendication 3 ou 4, la charge opacifiante donnant l'opacité par absorption de la lumière.

7. Papier selon la revendication 6, la charge opacifiante comportant ou étant un pigment choisi parmi les oxydes de fer ou comportant ou étant un pigment organique.

8. Papier selon l'une quelconque des revendications 3 à 7, la teneur en charge opacifiante étant supérieure ou égale à 10 % par rapport au poids total de la feuille, la quantité totale de charge opacifiante allant de préférence de 3 à 50 g/m², mieux de 15 à 40 g/m².

9. Stratifié décoratif (10 ; 20) comportant un papier décor filigrané (11) tel que défini dans l'une quelconque des revendications précédentes, le filigrane étant visible en réflexion sur le stratifié.

10. Stratifié décoratif selon la revendication 9, présentant un contraste de couleur entre le papier décor filigrané (11) et la structure sous-jacente, la structure sous-jacente étant de préférence un panneau de particules (40), ou une ou plusieurs feuilles (12) de papier kraft imprégnées ou une feuille de contraste (13).

11. Stratifié décoratif selon la revendication 9 ou 10, le papier décor filigrané (11) étant non imprimé.

12. Stratifié décoratif selon l'une quelconque des revendications 9 à 11, ayant été obtenu par un procédé LPL, HPL ou CPL.

13. Procédé de fabrication d'un papier décor selon l'une quelconque des revendications 1 à 8, comportant la réalisation du filigrane (11a) en partie humide de la machine à papier à l'aide d'un rouleau filigraneur (33).

14. Procédé de fabrication d'un papier décor selon l'une quelconque des revendications 1 à 8, comportant la réalisation du filigrane (11a) en partie humide de la machine à papier à l'aide d'une toile d'égouttage comportant une structure permettant d'obtenir le filigrane souhaité.

15. Procédé de fabrication d'un stratifié, dans lequel on imprègne de résine thermodurcissable un papier décor filigrané (11) selon l'une quelconque des revendications 1 à 8.
